# EUROPEAN PATENT APPLICATION

(11) **EP 1 304 892 A2**
(43) Date of publication of application: **23.04.2003**
(21) Application number: 02256429.8
(22) Date of filing: 13.09.2002
(51) Int. Cl.: H04Q 7/22

(54) **Disseminating information**

(30) Priority: 16.10.2001 US 981597
(71) Applicant: Nortel Networks Limited, St. Laurent, Quebec H4S 2A9 (CA)
(72) Inventor: Stringer, David, Hertfordshire SG3 6BQ (GB); Drabwell, Peter, Cheshunt, Hertfordshire (GB); Roberts, Timothy, Thaxted, Essex CM6 2LR (GB); Robinson, Stuart, Cardiff (GB)
(74) Representative: Bewley, Ewan Stuart

(57) **Abstract**

A method of disseminating information to mobile individuals (4). The presence of an individual (4) in the vicinity of an entity (18) is detected. The entity (18) has information for dissemination. The individual's wishes to receive the information are verified and, in response to a positive verification, the information is disseminated to the individual (4). A system for disseminating information is also disclosed.

## Description

The effectiveness of any information, be it for, for example, guidance, warning or promotional purposes, is at least in part dependent upon it reaching an appropriate target individual or individuals at an appropriate time. The information media may be, for example, a notice or billboard, a document, a television broadcast or a web site. The most effective information is that which is tailored to a specific individual's location and preferences. However, this is not always possible either for, for example, logistical or cost reasons, and a broader approach has to be taken. In (what may be termed) a static situation, for instance where a potential target is browsing the Internet through his home PC, such tailoring is not so difficult to achieve. The location and medium of access is obviously known and, if the individual is willing to specify preferences or enter a scheme under which he or she (he) knows various preferences or habits may be monitored, then this is achievable. However, when the potential purchaser is mobile, tailoring advertisement exposure is more difficult to achieve.

An object of the invention is to provide a method of disseminating information to mobile individuals.

The above object is met by the combination(s) of features of the main claim(s), the sub-claims disclose further advantageous embodiments of the invention.

According to a first aspect, the invention provides a method of disseminating information to mobile individuals, the method comprising the steps of detecting the presence of an individual in the vicinity of an entity which has information for dissemination, verifying whether the individual wishes to receive the information and, in response to a positive verification, disseminating the information to the individual.

The information may be for guidance, warning, assistance, promotion or any other purpose. The entity may be an individual, group or organisation, whether commercial or not or anyone else who may have information they wish to disseminate. The information may be disseminated in audible, written or graphical form or any combination of those forms. Such forms may be considered as inactive. The information may be disseminated in active form, that is, as a program which, when executed, provides information in inactive form. The information may be indirect in that it may point or lead the individual to another information source or response to it may lead to information delivery by some alternative means.

The area in which the method is in operation may be divided into cells, and the individual may be considered in the vicinity of an entity if he and the entity are in the same cell. The method may further comprise indicating whether or not there is an entity located in the cell that has information to disseminate.

The method may further comprise storing a data profile for the individual in a database. The profile may include an indication of the individual's willingness to receive information and, in the event that the individual is willing, the individuals preferences. The preferences may include such details as the sports he is interested in, how he likes to spend his leisure time or any impending lifestyle decisions or any other details as the individual may be willing to divulge. Verifying whether the individual wishes to receive the information may comprise interrogating the data profile for the individual. The profile may be compiled by the individual at an appropriate time or may be compiled automatically by monitoring the individual's behaviour. For instance, if the individual has access to the Internet, his web browsing may be monitored to determine current interests etc. The profile may be updated continually, again, either by the individual or automatically.

The method may exclude the step of verifying, and information may be disseminated without verification, in other words, unsolicited.

The method may further comprise storing the information for dissemination.

The presence of an individual may be detected by virtue of the individual having a mobile communications device. The information may be disseminated using the device. The device may be a mobile telephone, which may operate with one of the following technologies: WAP; CDMA; GSM; GPRS; 2G; I-mode; W-CDMA; CDMA-2000 or any other suitable technology, a laptop or handheld computer or any other device adapted for mobile communications.

The method may further comprise establishing the position of the individual within the vicinity.

In a specific embodiment, the method according to the first aspect of the invention may be operated through a mobile communications network. When a subscriber contracts to take network services he may be asked to specify whether or not he wishes to receive bulletins from network partners via his network device; if he does, he may be asked to specify his preferences to enable matches with appropriate bulletins of those which may be available for dissemination. Mobile networks already operate according to a cell structure and already have a procedure for identifying a new entrant to a cell. These mechanisms may be utilised to trigger the steps of the invention. Alternatively, the device may store a map or similar information structure relating to trigger cells. Any of the communication methods utilised in connection with the device may be used to disseminate information. There are known, a number of mechanisms for determining the position of an individual within a cell, such as E-OTD, a-GPS and OTDOA. These and any other suitable mechanisms may be utilised in a method according to the invention. Some of these mechanisms involve measuring signals between the network transceivers and the individuals device.

The dissemination of information may be made time dependant so that dissemination occurs only at a time dependant upon the information. Moreover, the individual specificity of the dissemination process may be removed and the information may be disseminated to anyone who enters the vicinity of the entity or anyone who is in the vicinity of the entity, that is, broadcast to those individuals.

Any of the steps of a method according to the invention may be carried out by a computer program. Such programs may be stored on a computer program product or carrier.

According to a second aspect, the invention provides a system for disseminating information to mobile individuals, comprising detection means detecting the presence of an individual in the vicinity of an entity which has information for dissemination, an applications module verifying whether the individual wishes to receive the information and, in response to a positive verification, disseminating the information to the individual.

The area over which the system may operate may be divided into cells and the individual may be considered to be in the vicinity of an entity if he and the entity are in the same cell. The detection means may store an indication of whether or not there is an entity located in the cell that has information to disseminate.

The applications module may comprise a database storing a data profile for the individual including an indication of the individuals willingness to receive information and, in the event that the individual is willing, preferences. The applications module may comprise means for storage storing information for dissemination.

The individual may have a mobile communication device and the detection means may detect the presence of the individual by virtue of the individual having a mobile communication device. The information may be disseminated to the individual using the mobile device.

The detection means may establish the position of the individual within the vicinity.

According to a third aspect the invention provides a method of disseminating secondary information related to primary information to mobile individuals, comprising detecting the presence of an individual in the vicinity of primary information and, in response to detection, disseminating secondary information to the individual.

The primary information could, for instance, be a billboard advertisement and, on detecting that an individual has been in the vicinity of the advertisement, an advertiser may seek to reinforce his advertisement by promoting to the individual, say by sending him the URL to a related web page, more detailed information on the product featured in the advertisement. Such a method is equally applicable to other forms of information dissemination.

The summary of the invention does not necessarily disclose all the features essential for defining the invention; the invention may reside in a sub-combination of the disclosed features.
Figure 1 is a schematic diagram of an area in which a method according to an aspect of the invention is in operation;
Figure 2 is a schematic diagram of a system according to an aspect of the invention.

### DETAILED DESCRIPTION

The following description is of preferred embodiments by way of example only and without limitation to the combination of features necessary for carrying the invention into effect.

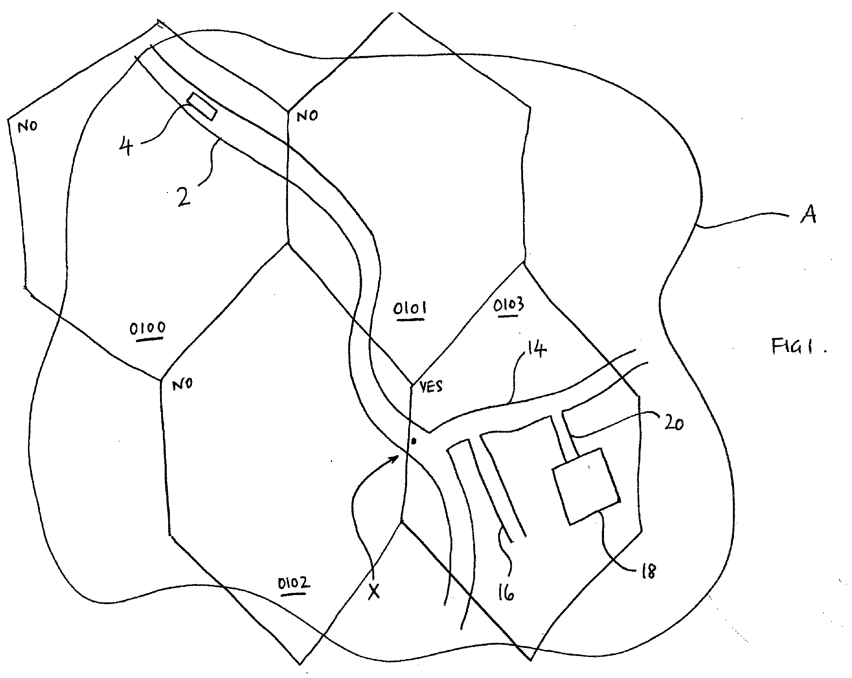

With reference to figure 1, an area A which is part of a town, includes roads 2, 14, 16 and 20; at the one end of the road 20 is a shopping precinct 18. An individual, who is mobile communications services subscriber, equipped with a mobile communications handset, is a passenger in a vehicle 4 travelling through the area A. For the purpose of mobile communications, the area A is divided into cells, each with a unique cell identifier (id) 0100, 0101, 0102 and 0103.

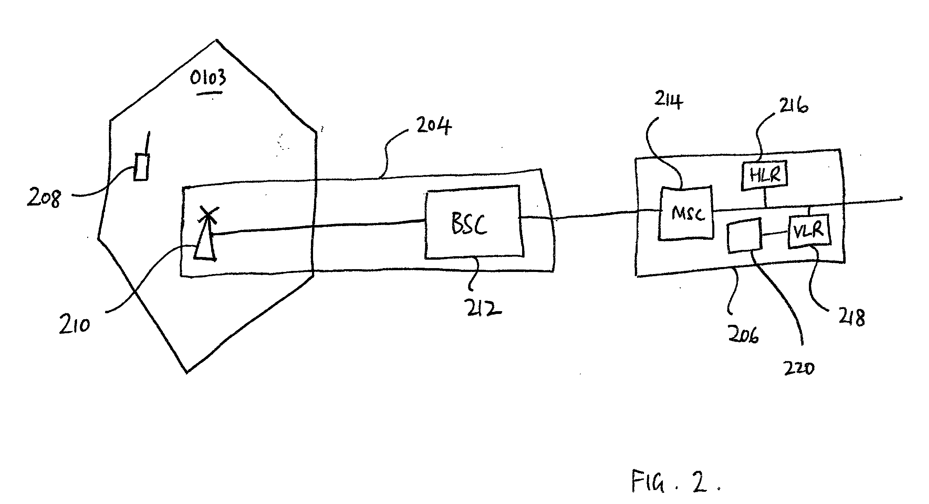

With further reference to figure 2, each of the cells is defined by one or more base station transceivers 210. The transceivers 210 handle wireless telephone communications to and from any mobile communications devices 208, such as the handset which the passenger in the car 4 has, base station controllers 212 which, together with the transceivers 210 form the base station sub-system 204, manage the communications by the transceivers. The base station sub-system 204 is connected to a network sub-system 206 which includes a mobile services switching centre (MSC) 214, a home location register (HLR) 216 and a visitor location register (VLR) 218. The MSC covers the whole of the area A, functioning as the main switching node and supporting each handset in term of, for example, registration, authentication, location updating, handing over and call routing to a roaming subscriber. The HLR 216 registers the current location within the network of each handset. The VLR 218 is associated with the mobile switching centre for the area A. Each device 208 within the area A registers its current location within the VLR 218 which informs the HLR 216 of the whereabouts of each handset registered with it.

The location of the handset is registered with the HLR 216 and the VLR 218 in terms of the id of the cell in which it is located. Thus, in turns of geographical location, knowledge of the cell id provides a broad indication of handset position. The accuracy of the position depends upon the size of the cell and the spacing between transceivers. For example, in densely populated urban locations, the cell id may pinpoint a handset to within hundreds of metres; whereas, in a sparsely populated rural location the cell id may only pinpoint the handset to within tens of kilometres. It is, however, possible to refine the establishment of handset position by carrying out location measurements such as, for instance, timing the reflection of signals from a transceiver to a handset or using a GPS or similar type positioning mechanism.

When each subscriber contracted to take the network operator's mobile services they were asked whether or not they wish to receive partner bulletins. The operator's partners could be any individual, group, or organisation, whether commercial or not; typically, the partner would be a retail outlet. The bulletins may be for guidance, warning or promotional purposes. Typically, a retail outlet may wish to promote a current special offer. If the subscriber accepts to receiver partners bulletins, he or she will be asked to specify a series of preferences; these will tailor bulletins to their interests and requirements. For example, the subscriber may specify the sports in which they are interested, how they like to spend their leisure time and any impending lifestyle decisions such as purchasing a car. All of these preferences are stored in the subscribers data profile in a database in the applications module 220 with the MSC 214. The applications module 220 also has a storage facility in which partner bulletin data is stored.

By way of example, a vehicle dealership, located within the shopping precinct 18, is a network operator partner. On a specific day it has a "special offer" on one model of vehicle which it wishes to promote, and to attract people into its showroom. It therefore wishes to distribute to any individuals in the vicinity of the showroom or passing through the vicinity, who are known to have an interest in purchasing a vehicle, a bulletin alerting them of the existence of the special offer. On the specific day, the offer data is uploaded to the storage facility in the applications module 220. The applications module 220 then informs the VLR 218 corresponding to the cell in which the vehicle dealership is located that an entity in that cell has a bulletin for dissemination, and the VLR 218 marks that cell id with a "YES" flag. All ids corresponding to the cells in which there are no such entities remain marked with "NO" flags.

By further way of example, consider that the individual who is a passenger in the vehicle 4, on contracting to take mobile services from the network operator, indicated a willingness to accept partner bulletins and, in particular, that he intended to purchase a new car within the next six months. These preferences are stored in the database in the applications data module 220 with the individual's data profile. On his journey through the area A, the subscriber initially passes into cell 0100 which is marked with a NO flag because it does not contain any network partners with bulletins for dissemination. On entering the cell 0100, the individual's handset registers with the VLR/HLR 218/216. Subsequently, as the vehicle 4 progresses "southwards" into cell 0101, 0102; in each the individual's handset is handed over to and registers with the VLR/HLR 216/218. The vehicle 4 continues on its journey and enters cell 0103; because this is the cell 0103 in which the vehicle dealership is located, it is marked with a YES flag. Hence, when the individual's handset registers with the VLR/HLR 216, 218, the VLR 218 notifies the applications data module 220 that a new individual has entered the cell 0103; the VLR 218 also forwards the individual's identity details. In response, the applications module 220 interrogates the database for the data profile corresponding to the individual to determine (1) whether the individual accepts partner bulletins and (2) whether the bulletins held for dissemination by partners in that cell match the individual's preferences. In this case, the individual has indicated an intention to purchase a vehicle and a vehicle dealership has sales to promote, so there is a match. Accordingly, the applications data module 220 sends the bulletin from the storage facility to the subscriber. The bulletin contains the message "YOU ARE WITHIN 0.5 KM OF THE AWESOME CAR DEALERSHIP WHICH TODAY IS OFFERING $1000 DISCOUNT ON ALL NEW MODELS".

The bulletin message may be delivered by any wireless communication mechanism to the individual's handset, according to the type and capabilities of the handset, such as voice message, SMS text message, or, if the handset has a data channel and a web browser, as a web page or any other format that the device may support (e.g. fax, video stream). In the latter case, the facilities provided by WAP mean that the message could include graphics such as a map.

In a modified embodiment of the system, a more precise location of the subscriber may be established by carrying out location measurements, such as, for instance, having the reflection signal from a transceiver to a handset, in which case the information provided to the subscriber may be more specifically tailored. For example, on entering cell 0103, the position of the subscriber may be established as being more or less at position X. Then, the message may have location specific content such as directions from position X to the location of the shopping precinct 18. In the case of a voice or SMS message, the bulletin may be of the form: "TURN FIRST LEFT AND SECOND RIGHT FOR AWESOME CAR DEALERSHIP". In the case of an internet message, the subscriber may be provided with a map highlighting the position X the position of the shopping precinct 18 and the route between the two.

In yet another modified embodiment of the system, the network partner may have time specific bulletins for dissemination. For example, the network partner may be a restaurant which wishes to attract potential diners to a lunchtime special offer or a cinema wishing to attract potential patrons to a particular screening of a film which is under-subscribed. In either instance, the network partner may want or it may only be of any use to disseminate an appropriate bulletin during a particular time frame. Hence, only subscribers entering the relevant cell during that particular time frame will be sent the bulletin.

In yet a further modified embodiment of the system, rather than bulletins being prompted by a match between the cell location of a subscriber, the cell location of a network partner and the preferences of the subscriber, bulletins relating to a network partner within a cell may be sent to any subscriber handset registering in that cell or a bulletin may be broadcast at one or more specific times to all handsets registered within that cell at that time.

The principles described above may also be adopted to monitor the potential exposure of subscribers for information at a fixed position within a cell. For instance, a cell may contain a billboard advertisement and the system may monitor whether or not the subscriber has been in the vicinity of or even passed the billboard.

In one more further modified embodiment of the system, the location of the subscriber may be detected in relation to the position of primary information, such as a billboard advertisement, and having detected an individuals exposure to such primary information, the message may be reinforced by sending to the individual secondary information, such as a link to the web site relating to the product advertised.

In summary, the invention is directed to a method of disseminating information to mobile individuals 4. The presence of an individual 4 in the vicinity of an entity 18 is detected. The entity 18 has information for dissemination. The individual's wishes to receive the information are verified and, in response to a positive verification, the information is disseminated to the individual 4. A system for disseminating information is also disclosed.

## Claims

1. A method of disseminating information to mobile individuals (4), comprising detecting the presence of an individual in the vicinity of an entity (18) which has information for dissemination, verifying whether the individual wishes to receive the information and, in response to a positive verification, disseminating the information to the individual.

2. A method according to claim 1 wherein an area in which the method is in operation is divided into cells (0100, 0101, 0102, 0103), and the individual is considered in the vicinity of an entity if he and the entity are in the same cell.

3. A method according to claim 2 further comprising indicating whether there is an entity located in the cell that has information to disseminate.

4. A method according to any of the preceding claims further comprising storing a data profile for the individual in a database.

5. A method according to claim 4 wherein the profile includes an indication of the individual's willingness to receive information and, in the event that the individual is willing, the individual's preferences.

6. A method according to claim 4 or claim 5 wherein verifying whether the individual wishes to receive the information may comprise interrogating the data profile for the individual.

7. A method according to any of the preceding claims further comprising storing the information for dissemination.

8. A method according to any of the preceding claims wherein the presence of an individual is detected by virtue of the individual having a mobile communications device (208).

9. A method according to claim 8 wherein the information is disseminated using the device.

10. A method according to any of the preceding claims further comprising establishing the position of the individual within the vicinity.

11. A method according to any of the preceding claims wherein the individual specificity of the dissemination process is removed and the information is disseminated to anyone who enters the vicinity of the entity or anyone who is in the vicinity of the entity.

12. A computer program carrying out any of the steps comprising a method according to any of the preceding claims.

13. A system for disseminating information to mobile individuals (4), comprising detection means detecting the presence of an individual in the vicinity of an entity (18) which has information for dissemination, an applications module (220) verifying whether the individual wishes to receive the information and, in response to a positive verification, disseminating the information to the individual.

14. A system according to claim 13 wherein an area over which the system is in operation is divided into cells (0100, 0101, 0102, 0103), and the individual is considered to be in the vicinity of an entity if he and the entity are in the same cell.

15. A system according to claim 14 wherein the detection means stores an indication of whether there is an entity located in the cell that has information to disseminate.

16. A system according to any of claims 13-15 wherein the applications module comprises a database storing a data profile for the individual including an indication of the individuals willingness to receive information and, in the event that the individual is willing, the individual's preferences.

17. A system according to any of claims 13-16 wherein the applications module comprises means for storage storing information for dissemination.

18. A system according to any of claim 13-17 wherein the individual has a mobile communications device (208) and the detection means detects the presence of the individual by virtue of the individual having the device. The information may be disseminated to the individual using the mobile device.

19. A system according to any of claims 13-18 wherein the detection means establishes the position of the individual within the vicinity.

20. A method of disseminating secondary information related to primary information to mobile individuals (4), comprising detecting the presence of an individual in the vicinity of primary information and, in response to detection, disseminating secondary information to the individual.

21. A communications network including a system according to any of claims 13-19.
